(19) Europäisches Patentamt
European Patent Office
Office européen des brevets

(11) **EP 1 775 608 A1**

(12) **DEMANDE DE BREVET EUROPEEN**

(43) Date de publication:
**18.04.2007 Bulletin 2007/16**

(51) Int Cl.:
*G02B 6/126* (2006.01)      *G02B 6/122* (2006.01)
*G02B 6/34* (2006.01)

(21) Numéro de dépôt: **06121863.2**

(22) Date de dépôt: **06.10.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **14.10.2005 FR 0510511**

(71) Demandeur: **Alcatel Lucent**
**75008 Paris (FR)**

(72) Inventeurs:
• **Dagens, Béatrice**
**92160 Antony (FR)**
• **Duan, Guang-Hua**
**92290 Chatenay-Malabry (FR)**

(74) Mandataire: **Bréda, Jean-Marc et al**
**Marks & Clerk France**
**Conseils en Propriété Industrielle**
**31-33, Avenue Aristide Briand**
**94117 Arcueil Cedex (FR)**

(54) **Polariseur compact et séparateur de polarisation associé pour dispositifs à semi-conducteurs**

(57) Le domaine de l'invention est celui des dispositifs optiques à semiconducteurs utilisés notamment pour les télécommunications à fibre optique.

Pour fonctionner efficacement, un certain nombre de dispositifs à semi-conducteur nécessitent l'utilisation de lumière polarisée dans un état de polarisation donnée.

Lorsque la connaissance de l'état de polarisation est perdue, l'élément optique selon l'invention permet de polariser de nouveau la lumière dans un état de polarisation connu. En utilisant deux de ces éléments en combinaison avec un coupleur, il est possible de réaliser un dispositif qui réalise la même fonction qu'un séparateur de polarisation. Cet ensemble optique délivre deux signaux de sortie dont l'état de polarisation est la projection de la polarisation initiale sur deux axes orthogonaux.

L'avantage principal de ces dispositifs est qu'ils sont réalisés à partir de rotateurs (11) de polarisation réalisés sur cristaux photoniques et qu'ils peuvent, par conséquent, être facilement intégrés à des dispositifs à semi-conducteur, ce que ne permet pas l'utilisation de polariseurs discrets.

FIG. 2

## Description

Le domaine de l'invention est celui des dispositifs optiques à semi-conducteurs utilisés notamment pour les télécommunications à fibre optique.

Un dispositif de télécommunications à fibre optique comprend essentiellement des dispositifs optoélectroniques de génération, de transduction, de mise en forme et d'amplification de signaux optiques et des fibres optiques de liaison.

Après traversée d'une fibre optique standard, la connaissance de l'état de polarisation du signal optique initial est perdue. Par conséquent, les dispositifs optoélectroniques utilisés pour la réception de ce signal doivent avoir des caractéristiques et des propriétés indépendantes de la polarisation. Il est très difficile d'obtenir de tels dispositifs avec des composants intégrés qui sont généralement sensibles à l'état de polarisation. On citera notamment les amplificateurs optiques. Il est possible d'utiliser des composants discrets moins sensibles à l'état de polarisation, mais, bien entendu, au détriment du coût et de l'encombrement du système.

Pour pallier cet inconvénient, on peut utiliser des systèmes à diversité de polarisation, qui traitent séparément deux polarisations orthogonales issues de la projection de la polarisation du signal sur deux axes orthogonaux. On utilise alors un séparateur de polarisation qui existe actuellement soit en optique libre soit en optique intégrée. Dans ce dernier cas, le composant présente des dimensions supérieures au millimètre, ces dimensions étant imposées par les composants utilisés pour réaliser la lame demi-onde nécessaire à la séparation des polarisations.

L'invention propose de pallier ces différents inconvénients en proposant un ensemble optique de polarisation intégré qui réalise la même fonction qu'un séparateur de polarisation. Cet ensemble optique délivre deux signaux de sortie dont l'état de polarisation est la projection de la polarisation initiale sur deux axes orthogonaux.

A partir de ce premier ensemble optique, il devient alors possible de réaliser des systèmes plus complexes qui délivrent un signal optique dont l'état de polarisation et l'énergie sont indépendantes de l'état de polarisation du signal d'entrée.

Les rotateurs optiques réalisés à partir de cristaux photoniques sont bien adaptés à la réalisation des dispositifs selon l'invention.

Plus précisément, l'invention a pour objet un dispositif de polarisation de signaux optiques caractérisé en ce qu'il comprend au moins un premier ensemble optique composé :

- D'un rotateur de polarisation ayant un axe de polarisation, agencé de façon à fournir, à partir d'un signal optique $S_I$ d'entrée polarisé linéairement selon une direction $P_I$ donnée, un signal optique de sortie $S_F$ polarisé linéairement selon une direction $P_F$ symétrique à la direction de polarisation du signal d'entrée par rapport audit axe de polarisation ;
- D'un premier coupleur optique de type 1x2 ayant une entrée optique et deux sorties optiques ;
- D'un second coupleur optique de type 2x1 ayant deux entrées optiques et une sortie optique ;
le rotateur de polarisation étant disposé entre la première sortie du premier coupleur et la première entrée du second coupleur, la seconde sortie du premier coupleur étant raccordée à la seconde entrée du second coupleur.

Avantageusement, le dispositif comprend, en outre :

- un second ensemble optique comprenant un second rotateur, un troisième et un quatrième coupleur, l'axe de polarisation du second rotateur de cet ensemble optique étant perpendiculaire à celui du premier rotateur, le rotateur de polarisation étant disposé entre la première sortie du troisième coupleur et la première entrée du quatrième coupleur, la seconde sortie du troisième coupleur étant raccordée à la seconde entrée du quatrième coupleur ;
- Un cinquième coupleur optique de type 1x2 ayant une entrée optique et deux sorties optiques reliées respectivement à l'entrée du premier ensemble optique et à l'entrée du second ensemble optique.

Avantageusement, les rotateurs sont des cristaux photoniques comportant plusieurs couches de matériau semi-conducteur, sensiblement planes et parallèles entre elles, lesdites couches comportant une série d'encoches identiques parallèles entre elles et inclinées par rapport au plan moyen des couches.

L'invention sera mieux comprise et d'autres avantages apparaîtront à la lecture de la description qui va suivre donnée à titre non limitatif et grâce aux figures annexées parmi lesquelles :

- La figure 1 représente une vue d'un rotateur optique utilisé dans les dispositifs selon l'invention ;
- La figure 2 représente le schéma fonctionnel d'un polariseur selon l'invention ;
- La figure 3 représente le schéma fonctionnel d'un dispositif de séparation de polarisation selon l'invention.
Sur les différentes figures, les conventions suivantes ont été adoptées :

- Les signaux optiques sont représentés par des flèches droites transparentes ;
- Les plans de polarisation sont représentés par des flèches noires orientées.

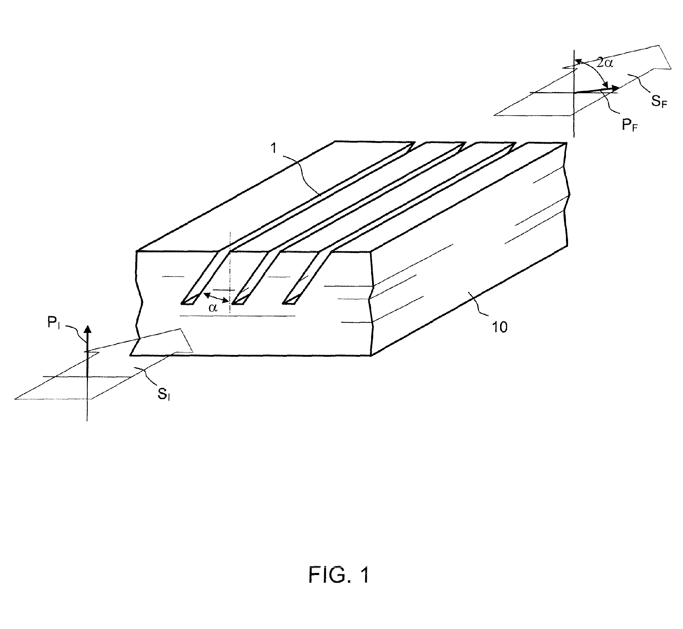

Il est apparu récemment des dispositifs semi-conducteurs intégrés permettant de faire tourner le plan de polarisation de la lumière. La figure 1 représente un exemple d'un dispositif de ce type. Il comprend essentiellement une hétéro-structure 10 comportant un empilement de couches sensiblement planes et parallèles entre elles réalisées en matériau semi conducteur. Les indices optiques de ces couches sont choisis de façon à assurer un guidage optique selon un axe perpendiculaire aux plans des couches. Généralement, l'empilement comprend une ou des couches dites bas indice disposées entre une ou des couches dites haut indice. Typiquement, les matériaux utilisés sont à base d'InP. Les couches comportent une série d'encoches 1 identiques parallèles entre elles et inclinées par rapport au plan moyen des couches. Ces encoches peuvent avoir la forme de sillons parallèles comme représenté sur la figure 1. Elles peuvent également avoir la forme de lignes ou de matrices de trous régulièrement espacés. On appellera, dans la suite du texte, la direction moyenne de l'inclinaison des encoches axe de polarisation. Les encoches ont généralement une profondeur comprise entre un et quelques microns, une longueur de quelques microns et une largeur de quelques dizaines de nanomètres. Elles sont séparées de quelques centaines de nanomètres et leur nombre varie entre quelques encoches et quelques dizaines d'encoches. L'inclinaison des encoches est typiquement de 45 degrés.

On peut démontrer que les deux états de polarisation d'un signal optique respectivement parallèle et perpendiculaire au plan moyen des encoches se propagent à des vitesses différentes. On peut ainsi obtenir, en fonction de la longueur de l'hétéro-structure, un déphasage connu entre les deux états de polarisation. Par conséquent, comme indiqué sur la figure 1, si les paramètres des encoches et de l'hétéro-structure sont convenablement choisis en fonction de la longueur d'onde des signaux optiques utilisés pour obtenir un déphasage de $\pi$ entre les deux modes de propagation, le plan de polarisation d'une onde lumineuse $S_I$ polarisée linéairement selon la direction $P_I$ qui fait un angle $\alpha$ avec le plan moyen des encoches tourne d'un angle $2\alpha$ après traversée de l'hétéro-structure. On obtient ainsi le signal $S_F$ polarisée linéairement selon la direction $P_F$. La fonction réalisée est équivalente à celle obtenue avec une lame demi-onde classique.

Ce type de rotateur est bien adapté pour réaliser des ensembles optiques de polarisation selon l'invention.

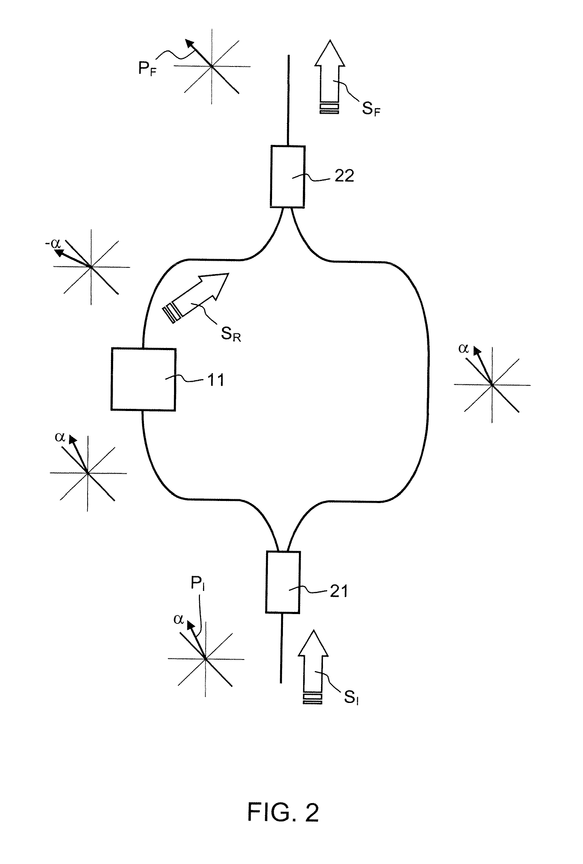

Un premier ensemble est décrit en figure 2. Il comprend :

- un rotateur de polarisation 11 ayant un axe de polarisation, agencé de façon à fournir, à partir d'un signal optique d'entrée $S_I$ polarisé linéairement selon une direction donnée $P_I$, un signal optique de sortie $S_R$ polarisé linéairement selon une direction $P_F$ symétrique à la direction de polarisation du signal d'entrée par rapport audit axe de polarisation ;
- un premier coupleur optique 21 de type 1x2 ayant une entrée optique et deux sorties optiques ;
- un second coupleur optique 22 de type 2x1 ayant deux entrées optiques et une sortie optique ;
  le rotateur de polarisation 11 étant disposé entre la première sortie du premier coupleur 21 et la première entrée du second coupleur 22, la seconde sortie du premier coupleur 21 étant raccordée à la seconde entrée du second coupleur 22.

Le fonctionnement de l'ensemble optique est le suivant. Soit un signal optique $S_I$ polarisé dont l'état de polarisation fait un angle $\alpha$ avec l'axe de polarisation du rotateur 11. Le premier coupleur 21 sépare ce signal $S_I$ en deux signaux d'intensité sensiblement égale et de même polarisation. Un de ces signaux traverse le rotateur. A la sortie du rotateur 11, le plan de polarisation de ce signal a tourné et fait maintenant un angle -$\alpha$ avec l'axe de polarisation du rotateur 11. Le second coupleur 22 combine ce signal $S_R$ avec la partie du signal issue du premier coupleur 21 et qui n'a pas traversé le rotateur. A la sortie du second coupleur 22, le plan de polarisation du signal de sortie $S_F$ a ainsi nécessairement la même direction que l'axe de polarisation du rotateur. Sa polarisation est donc connue. Si l'intensité du signal d'entrée vaut $I_O$, l'intensité du signal de sortie vaut, en supposant parfaits tous les composants optiques, $I_O.\cos^2\alpha$. On obtient bien la classique loi de Malus des polariseurs simples. L'avantage principal de cet ensemble est qu'il comprend uniquement des composants qui peuvent être facilement intégrés à des dispositifs à semi-conducteurs.

Les coupleurs sont réalisés préférentiellement à partir de guides d'onde intégrés. Pour minimiser les pertes optiques dans les coupleurs, il faut éviter d'utiliser des guides d'onde reliant les différents éléments optiques avec des rayons de courbure trop faibles, ce qui accroît un peu la longueur totale de l'ensemble optique. Typiquement la longueur totale d'un polariseur de ce type reste inférieure à 100 microns.

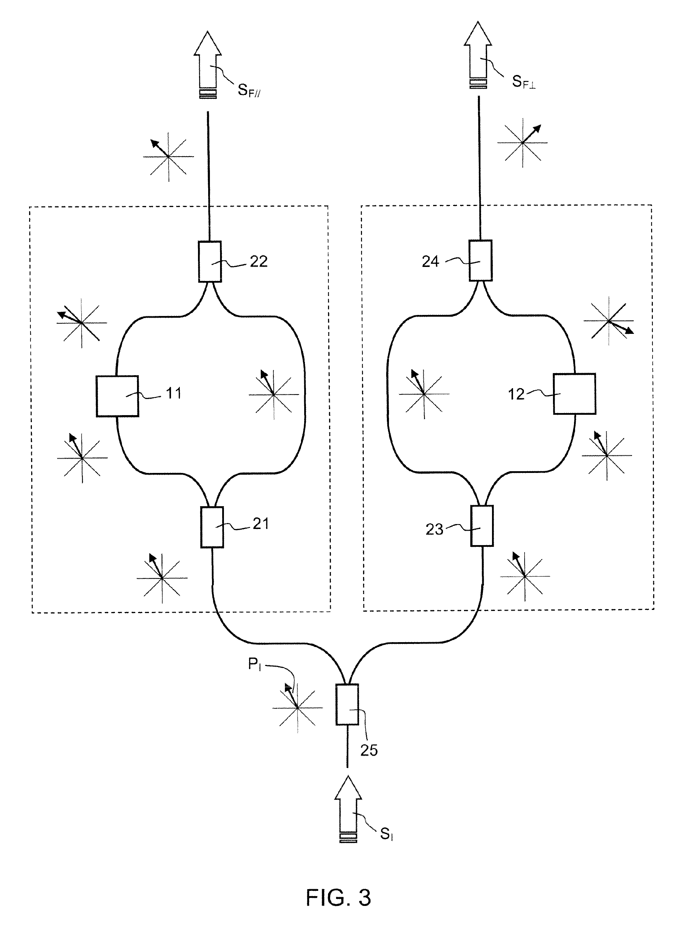

A partir de cet ensemble primaire, il est, bien entendu, possible de réaliser tous types de dispositifs utilisant des polariseurs. A titre d'exemple non limitatif, la figure 3 illustre un dispositif permettant de séparer les projections orthogonales du signal d'entrée.

Le dispositif de la figure 3 comprend essentiellement:

- Un premier ensemble optique tel que décrit ci-dessus comprenant un premier rotateur 11, un premier coupleur 21 et un second coupleur 22. Cet ensemble est entouré d'un rectangle pointillé sur la figure 3 ;
- Un second ensemble optique similaire au premier ensemble et comprenant un second rotateur 12, un troisième coupleur 23 et un quatrième coupleur 24 , l'axe de polarisation du second rotateur 12 de cet ensemble optique étant perpendiculaire à celui du premier rotateur 11. Cet ensemble est également entouré d'un rectangle pointillé sur la figure 3;
- Un cinquième coupleur optique 25 de type 1 x2 ayant une entrée optique et deux sorties optiques.

Le fonctionnement du dispositif optique est le suivant. Soit un signal optique $S_I$ polarisé selon la direction $P_I$ dont l'intensité du signal d'entrée vaut $I_O$. Le premier coupleur sépare ce signal en deux signaux $S_{F//}$ et $S_{F\perp}$ d'intensité sensiblement égale $I_O/2$ et de même polarisation.

Le premier de ces signaux $S_{F//}$ traverse le premier ensemble. Comme il a été vu précédemment, à la sortie du premier ensemble, le plan de polarisation de ce premier signal a la même direction que l'axe de polarisation du premier rotateur. Si l'état de polarisation du signal fait un angle $\alpha$ avec l'axe de polarisation du premier rotateur 11, l'intensité du signal d'entrée valant $I_O/2$, l'intensité du premier signal de sortie $S_{F//}$ vaut, en supposant parfaits tous les composants optiques, $I_O.[\cos^2 \alpha]/2$.

Le second de ces signaux traverse le second ensemble. A la sortie du second ensemble, le plan de polarisation de ce second signal $S_{F\perp}$ a la même direction que l'axe de polarisation du second rotateur 12. L'axe de polarisation du second rotateur est perpendiculaire à celui du premier rotateur. Par conséquent, L'intensité du signal d'entrée valant $I_O/2$, l'intensité du premier signal de sortie vaut, en supposant parfaits tous les composants optiques,

$$I_O . \left[ \cos^2 \left( \alpha + \frac{\pi}{2} \right) \right] \Big/ 2 , \text{ soit encore } I_O .[\sin^2 \alpha]/2.$$

L'état de polarisation du premier signal $S_{F//}$ issu du premier ensemble étant orthogonal avec le second signal $S_{F\perp}$ issu du second ensemble, la fonction de séparateur de polarisation est ainsi réalisée.

Typiquement la longueur totale d'un dispositif de ce type, compte-tenu des contraintes de courbure sur les guides d'onde reliant les différents coupleurs est de l'ordre de 150 microns.

Pour simplifier la réalisation technologique des dispositifs selon l'invention, il est intéressant d'utiliser un maximum de rotateurs ayant des axes de polarisation identiques ou symétriques. On diminue ainsi les manipulations pendant les étapes de réalisation.

Pour retrouver un signal d'amplitude plus importante, il est possible d'ajouter un amplificateur à la sortie de chaque branche du dispositif précédent. Par exemple, cet amplificateur peut être un amplificateur optique à semi-conducteur encore appelé SOA, acronyme anglo-saxon de Semiconductor Optical Amplifier ou un amplificateur optique à fibre dopé à l'Erbium encore appelé EDFA, acronyme anglo-saxon de Erbium Doped Fiber Amplifier. On ajuste dans ce cas l'état de polarisation du signal final de façon à optimiser le fonctionnement de ces amplificateurs.

**Revendications**

1. Dispositif de polarisation de signaux optiques **carac-**

**térisé en ce qu'**il comprend au moins un premier ensemble optique composé :

• D'un rotateur (11) de polarisation ayant un axe de polarisation, agencé de façon à fournir, à partir d'un signal optique $S_I$ d'entrée polarisé linéairement selon une direction $P_I$ donnée, un signal optique de sortie $S_F$ polarisé linéairement selon une direction $P_F$ symétrique à la direction de polarisation du signal d'entrée par rapport audit axe de polarisation ;
• D'un premier coupleur optique (21) de type 1 x2 ayant une entrée optique et deux sorties optiques ;
• D'un second coupleur optique (22) de type 2x1 ayant deux entrées optiques et une sortie optique ;
le rotateur de polarisation (11) étant disposé entre la première sortie du premier coupleur (21) et la première entrée du second coupleur (22), la seconde sortie du premier coupleur (21) étant raccordée à la seconde entrée du second coupleur (22).

2. Dispositif de polarisation selon la revendication 1, **caractérisé en ce qu'**il comprend, en outre :

• un second ensemble optique comprenant un second rotateur (12), un troisième et un quatrième coupleur (23, 24), l'axe de polarisation du second rotateur (12) de cet ensemble optique étant perpendiculaire à celui du premier rotateur (11), le rotateur de polarisation (12) étant disposé entre la première sortie du troisième coupleur (23) et la première entrée du quatrième coupleur (24), la seconde sortie du troisième coupleur (23) étant raccordée à la seconde entrée du quatrième coupleur (24);
• Un cinquième coupleur optique (25) de type 1x2 ayant une entrée optique et deux sorties optiques reliées respectivement à l'entrée du premier ensemble optique et à l'entrée du second ensemble optique.

3. Dispositif selon l'une des revendications précédentes, **caractérisé en ce que** les rotateurs sont des cristaux photoniques comportant plusieurs couches de matériau semi-conducteur, sensiblement planes et parallèles entre elles, lesdites couches comportant une série d'encoches identiques parallèles entre elles et inclinées par rapport au plan moyen des couches.

FIG. 1

FIG. 2

FIG. 3

Office européen
des brevets

**RAPPORT DE RECHERCHE EUROPEENNE**

Numéro de la demande

EP 06 12 1863

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2002/037126 A1 (MARTINELLI MARIO ET AL) 28 mars 2002 (2002-03-28) | 1 | INV. G02B6/126 G02B6/122 G02B6/34 |
| Y | * alinéas [0044] - [0046] * <br> * figure 1 * <br> ----- | 3 | |
| Y | GB 2 384 319 A (* MARCONI OPTICAL COMPONENTS LIMITED; * BOOKHAM TECHNOLOGY PLC) 23 juillet 2003 (2003-07-23) <br> * page 8, ligne 23 - page 10, ligne 12 * <br> * figures 5,6b * <br> ----- | 3 | |
| Y | US 2004/184129 A1 (SOLLI DANIEL ROY) 23 septembre 2004 (2004-09-23) <br> * alinéa [0055] * <br> ----- | 3 | |
| A | FLANDERS D C: "SUBMICROMETER PERIODICITY GRATINGS AS ARTIFICIAL ANISOTROPIC DIELECTRICS" <br> APPLIED PHYSICS LETTERS, AIP, AMERICAN INSTITUTE OF PHYSICS, MELVILLE, NY, US, vol. 42, no. 6, 1983, pages 492-494, XP000916610 <br> ISSN: 0003-6951 <br> * page 493, colonne 2, alinéa 2 * <br> * page 494, colonne 1, alinéa 2 * <br> * figure 4 * <br> ----- | 3 | **DOMAINES TECHNIQUES RECHERCHES (IPC)** <br><br> G02B |
| A | US 2004/258355 A1 (WANG JIAN ET AL) 23 décembre 2004 (2004-12-23) <br> * alinéas [0058] - [0061] * <br> * figures 10A-10B * <br> ----- <br><br> -/-- | 3 | |

Le présent rapport a été établi pour toutes les revendications

| Lieu de la recherche | Date d'achèvement de la recherche | Examinateur |
|---|---|---|
| Berlin | 14 février 2007 | Verdrager, Véronique |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P04C02)

**Office européen**
**des brevets**

**RAPPORT DE RECHERCHE EUROPEENNE**

Numéro de la demande

EP 06 12 1863

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SUGIMOTO N ET AL: "WAVEGUIDE POLARIZATION-INDEPENDENT OPTICAL CIRCULATOR" IEEE PHOTONICS TECHNOLOGY LETTERS, IEEE SERVICE CENTER, PISCATAWAY, NJ, US, vol. 11, no. 3, mars 1999 (1999-03), pages 355-357, XP000823476 ISSN: 1041-1135 * page 355, colonne 1, alinéa 3 * * page 356, colonne 1, alinéa 1 * * figures 1,2 * ----- | 1 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Berlin | 14 février 2007 | Verdrager, Véronique |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 12 1863

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-02-2007

| Document brevet cité au rapport de recherche | Date de publication | Membre(s) de la famille de brevet(s) | Date de publication |
|---|---|---|---|
| US 2002037126 A1 | 28-03-2002 | AUCUN | |
| GB 2384319 A | 23-07-2003 | AU 2003205818 A1 | 02-09-2003 |
| | | WO 03062909 A2 | 31-07-2003 |
| US 2004184129 A1 | 23-09-2004 | AUCUN | |
| US 2004258355 A1 | 23-12-2004 | AUCUN | |

EPO FORM P0460

Pour tout renseignement concernant cette annexe : voir Journal Officiel de l'Office européen des brevets, No.12/82